# EUROPEAN PATENT SPECIFICATION

(11) **EP 4 445 976 B1**
(45) Date of publication and mention of the grant of the patent: **04.03.2026**
(21) Application number: 22903989.6
(22) Date of filing: 17.11.2022
(51) Int. Cl.: A63F 13/67, A63F 13/422, A63F 13/45, A63F 13/497, A63F 13/65, A63F 13/424

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 09.12.2021 JP 2021200110
(43) Date of publication of application: 16.10.2024
(73) Proprietor: Sony Group Corporation, Tokyo 108-0075 (JP)
(72) Inventor: TAKASHIMA, Kouichiro, Tokyo 108-0075 (JP)
(74) Representative: D Young & Co LLP
(86) International application number: PCT/JP2022/042647
(87) International publication number: WO 2023/106058

(56) References cited:
- WO-A1-2020/096680
- WO-A1-2021/080793
- WO-A1-2021/080793
- JP-A- 2020 168 539
- JP-B1- 6 843 410
- US-A1- 2020 197 796
- US-A1- 2020 324 206
- US-A1- 2021 106 918

## Description

### Field

The present disclosure relates to an information processing device, an information processing method, and a program.

### Background

In recent years, the spread of portable information processing devices such as smartphones and tablet terminals is remarkable. In addition, in these information processing devices, performance of image processing and communication processing is also rapidly improved, and a user can easily enjoy various kinds of game application software (hereinafter, referred to as "game application") such as, for example, a third-person shooter (TPS) and a massively multiplayer online role-playing game (MMORPG) by using these information processing devices.

Furthermore, in such a situation, in order to further improve convenience of the user, some game applications have, for example, an auto-play function of automatically executing predetermined game contents set in advance. Low-skill users, busy users, and the like can be assisted in their own gameplay by using such an auto-play function. Similarly, a technology of assisting team organization and strategy in a team environment such as the MMORPG has also been proposed (see, for example, Patent Literature 1).

### Citation List

### Patent Literature

Patent Literature 1: Japanese Patent Application Laid-open No. 2021-041225
Other prior art is described in WO2021/08793A, US2020/197796A and US2021/106918A.

### Summary

### Technical Problem

However, the above-described conventional technology has room for further improvement in improving convenience in gameplay of the user regardless of the game application.

For example, in a case where the above-described conventional technology is used, only a user who uses a specific game application having an auto-play function can be assisted in gameplay.

Note that such a problem is also a common problem in a case where a user operates an application that is other than a game application and that has or does not have an automatic operation function corresponding to the auto-play function.

Thus, the present disclosure proposes an information processing device, an information processing method, and a program capable of improving convenience in application operation by the user regardless of the application.

### Solution to Problem

In order to address the above problems, one aspect of an information processing device according to the present disclosure is provided in claim 1.

### Brief Description of Drawings

FIG. 1 is a schematic explanatory diagram (part 1) of an information processing method according to an existing technology.
FIG. 2 is a schematic explanatory diagram (part 2) of the information processing method according to the existing technology.
FIG. 3 is a schematic explanatory diagram (part 1) of an information processing method according to an embodiment of the present disclosure.
FIG. 4 is a schematic explanatory diagram (part 2) of the information processing method according to the embodiment of the present disclosure.
FIG. 5 is a block diagram illustrating a configuration example of an information processing device according to the embodiment of the present disclosure.
FIG. 6 is a view illustrating an example of an on/off setting screen of auto-play.
FIG. 7 is an explanatory diagram (part 1) of a setting example of auto-play corresponding to a situation at the time of play.
FIG. 8 is an explanatory diagram (part 2) of the setting example of the auto-play corresponding to the situation at the time of the play.
FIG. 9 is an explanatory diagram (part 1) of an example of interactively setting the auto-play by using a replay of a scene.
FIG. 10 is an explanatory diagram (part 2) of the example of interactively setting the auto-play by using the replay of a scene.
FIG. 11 is an explanatory diagram of a setting example of semi-auto-play.
FIG. 12 is an explanatory diagram of an example of notification to another information processing device.
FIG. 13 is a processing sequence (part 1) of learning algorithm in the information processing device.
FIG. 14 is a processing sequence (part 2) of the learning algorithm in the information processing device.
FIG. 15 is a hardware configuration diagram illustrating an example of a computer that realizes functions of the information processing device.

### Description of Embodiments

In the following, embodiments of the present disclosure will be described in detail on the basis of the drawings. Note that in each of the following embodiments, overlapped description is omitted by assignment of the same reference sign to the same parts.

Furthermore, in the following, a case where an application operated by a user is a game application will be described as a main example.

Furthermore, the present disclosure will be described in the following order of items.
1. Outline
2. Configuration of an information processing device
3. Setting example of auto-play
   3-1. Auto-play
   3-2. Semi-auto-play
4. Example of notification to another information processing device
5. Processing sequence of learning algorithm
6. Modification example
7. Hardware configuration
8. Conclusion

### <<1. Outline>>

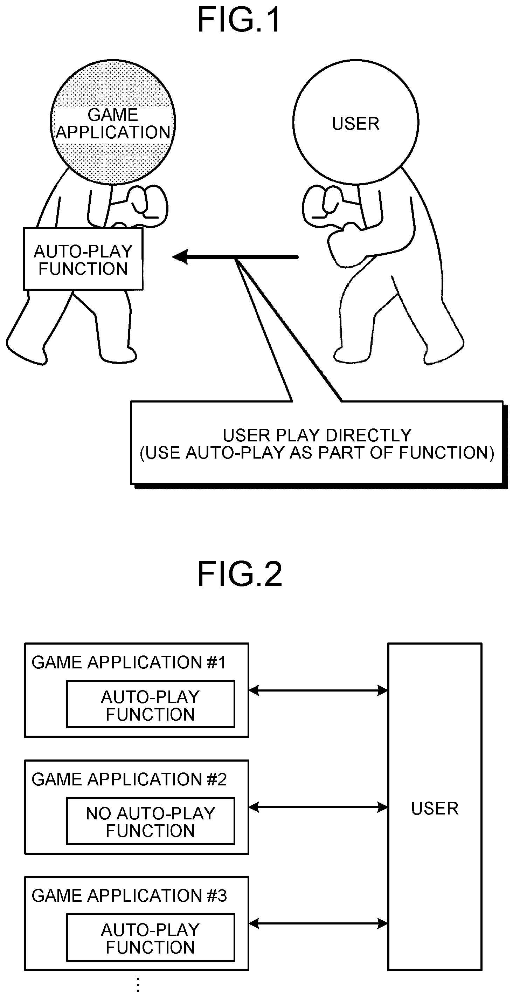

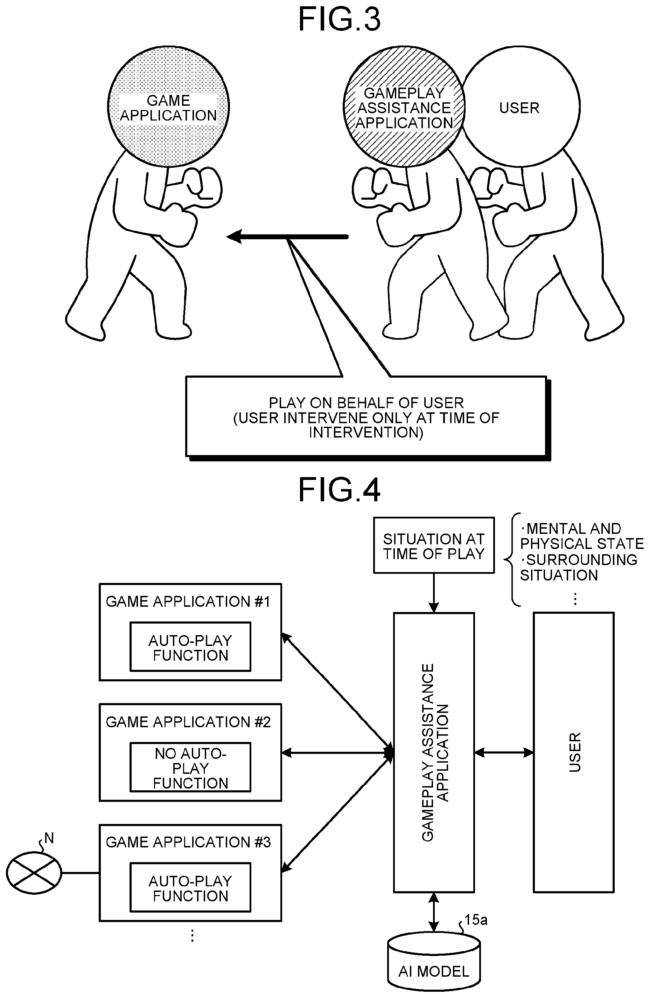

FIG. 1 is a schematic explanatory diagram (part 1) of an information processing method according to an existing technology. FIG. 2 is a schematic explanatory diagram (part 2) of the information processing method according to the existing technology. FIG. 3 is a schematic explanatory diagram (part 1) of an information processing method according to an embodiment of the present disclosure. FIG. 4 is a schematic explanatory diagram (part 2) of the information processing method according to the embodiment of the present disclosure.

In recent years, a user can easily enjoy various game applications such as a TPS and an MMORPG by using a portable information processing device such as a smartphone or a tablet terminal, and some game applications have an auto-play function as a part of the function.

Low-skill users, busy users, and the like can be assisted in their own gameplay by using such an auto-play function. On the other hand, as a matter of course, a user who uses a game application not having the auto-play function cannot be assisted in the gameplay by the auto-play function.

Specifically, as illustrated in FIG. 1, the existing technology is based on a relationship in which the user directly plays one game application on a one-to-one basis. Furthermore, at this time, even when the game application has the auto-play function, the user can only use the auto-play as a part of the function of the game application. Contents of the auto-play usually varies depending on game applications.

Thus, as illustrated in FIG. 2, in a case where the user uses a plurality of game applications by using one information processing device, the user needs to perform different operations for game sessions of the game applications respectively with respect to the use of the auto-play in the existing technology.

That is, in the existing technology, obviously, the user cannot use the auto-play for the game application that does not have the auto-play function. Thus, in the example of FIG. 2, the user cannot use the auto-play for a game application #2, and for example, a monotonous level grinding work that is so-called "leveling" also needs to be repeated steadily by his/her own.

On the other hand, although the user can use the auto-play for the game applications having the auto-play function, that is, game applications #1 and #3 in the example of FIG. 2, contents of the auto-play that can be set vary depending on the game applications. For example, there are some game applications in which the above-described level grinding can be performed and those in which the level grinding cannot be performed.

Thus, in the existing technology, even in a case where the user can use the auto-play, there are many cases where it is inconvenient that the user needs to perform different kinds of setting of the auto-play respectively for game sessions or the contents of the auto-play is limited.

Thus, in the information processing method according to the embodiment of the present disclosure, a situation at the time of play by the user on the game application is learned by machine learning, and operation assistance processing of performing the auto-play of the game application by using a learning result of the machine learning is executed across one or more of the game applications.

Specifically, the information processing device according to the embodiment of the present disclosure has a gameplay assistance function. As illustrated in FIG. 3, a "gameplay assistance application" that executes such a function is interposed between the game application and the user, and provides an auto-play function of automatically playing a game on behalf of the user.

Furthermore, as illustrated in FIG. 4, the gameplay assistance application provides the auto-play function in a form of integrating a plurality of game applications, in other words, across a plurality of game applications. Thus, the gameplay assistance application can also provide the auto-play function for the game application #2 that does not originally have the auto-play function. In addition, the gameplay assistance application can integrally perform setting of the auto-play of the game applications #1 and #3 originally having individual auto-play functions in addition to the game application #2.

For example, as illustrated in FIG. 4, the gameplay assistance application sets the auto-play on the basis of an artificial intelligence (AI) model 15a that learns a "situation at the time of play" including "mental and physical state" of the user based on vital data, a "surrounding situation" such as a global positioning system (GPS) position and temperature, and the like as needed. The AI model 15a is, for example, a deep neural network (DNN) or the like.

That is, in the information processing method according to the embodiment of the present disclosure, information that is related to the situation at the time of play by the user and that is indicated by not only the game application but also what is other than the game application is acquired, and contents of the auto-play is set according to a feature at the time of play of the user which feature is learned by utilization of the information.

For example, the gameplay assistance application replays a video of a play scene played by the user in the past, and proposes contents of the auto-play according to each scene and corresponding to the feature of the user at the time of play to the user. Then, contents of the auto-play are set in a form of being interactive with the user for the proposal. Then, the gameplay assistance application executes the auto-play according to contents of the set auto-play.

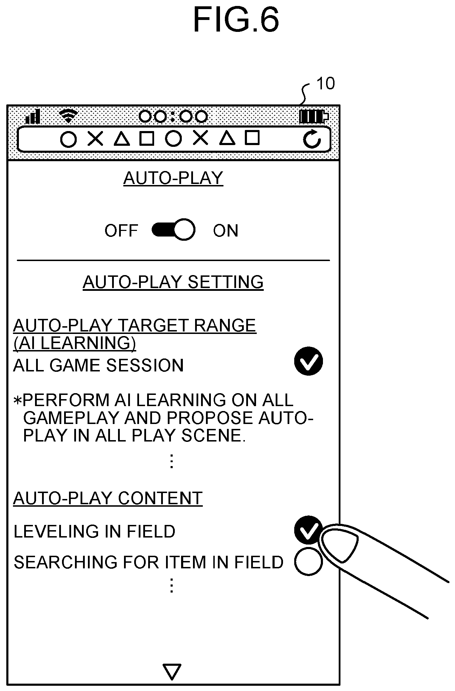

A specific example related to setting and execution of the auto-play in the information processing method according to the embodiment of the present disclosure will be described later in description with reference to FIG. 6 to FIG. 10.

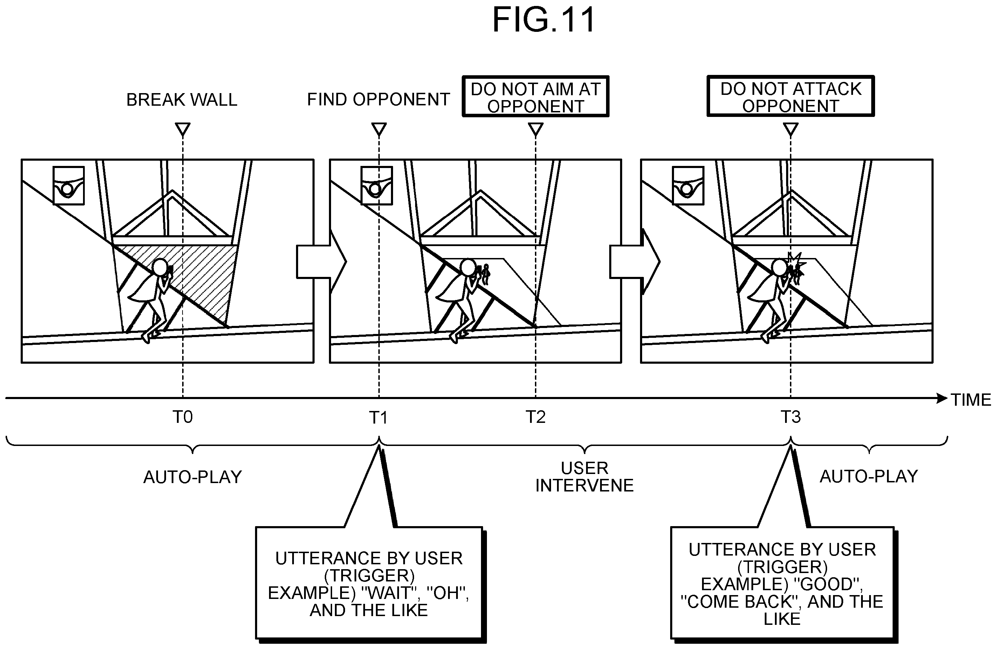

Furthermore, in the information processing method according to the embodiment of the present disclosure, as illustrated in FIG. 3, it is possible to provide a semi-auto-play function that allows interrupt intervention only when the user intervenes in the gameplay assistance application that plays on behalf of the user. A specific example of the semi-auto-play function will be described later in description with reference to FIG. 11.

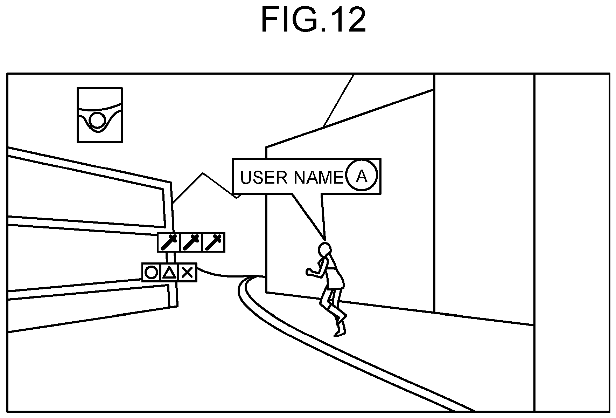

Furthermore, as illustrated in FIG. 4, in the information processing method according to the embodiment of the present disclosure, the gameplay assistance application can notify the other information processing device 10 that the auto-play function is used with respect to a game application that exchanges information with the other information processing device 10 via a network N, such as the game application #3. Such a specific example will be described later in description with reference to FIG. 12.

In such a manner, in the information processing method according to the embodiment of the present disclosure, the situation at the time of play by the user on the game application is learned by machine learning, and the operation assistance processing of performing the auto-play of the game application by using the learning result of the machine learning is executed across one or more of the game applications.

Thus, according to the information processing method according to the embodiment of the present disclosure, it is possible to improve convenience in gameplay by the user regardless of the game application. Specifically, according to the information processing method according to the embodiment of the present disclosure, regardless of the game application, monotonous work such as level grinding can be automatically performed on behalf of the user, and a burden on the user can be reduced.

Note that as a supplement for the "level grinding", the monotonous level grinding work that needs to be performed steadily by the user in the existing technology includes two meanings. The first is work of repeatedly laying down a monster or the like and accumulating an experience point in an RPG-type game. In a case of a sport-related game, the work is to repeatedly perform practice and a match and accumulate an experience point.

The second is work of improving an attribute of a character by using the accumulated experience point. In the second case, in a case of the RPG-type game, when the experience points necessary to be a next level are accumulated, "raising the level" automatically occurs due to processing on a game side, and there are many cases where it is not necessary for the user himself/herself to perform the operation for raising the level. On the other hand, although the auto-play function is included in the sport-related game, the experience points are accumulated but are not consumed in many cases while the practice or the match is repeatedly performed in the auto-play function.

Thus, in this case, the user needs to stop the auto-play once and perform operation to improve ability of the character by manual operation. That is, in this case, the user needs to manually perform operation of selecting a specific attribute to be improved from among attributes such as offensive ability, defensive ability, running ability, and dribbling of the character by using the accumulated experience points.

The information processing method according to an embodiment of the present disclosure realizes automatic execution of the monotonous level grinding work on behalf of the user. Hereinafter, a configuration example of the information processing device 10 to which the information processing method according to the embodiment of the present disclosure is applied will be described more specifically.

### <<2. Configuration of an information processing device>>

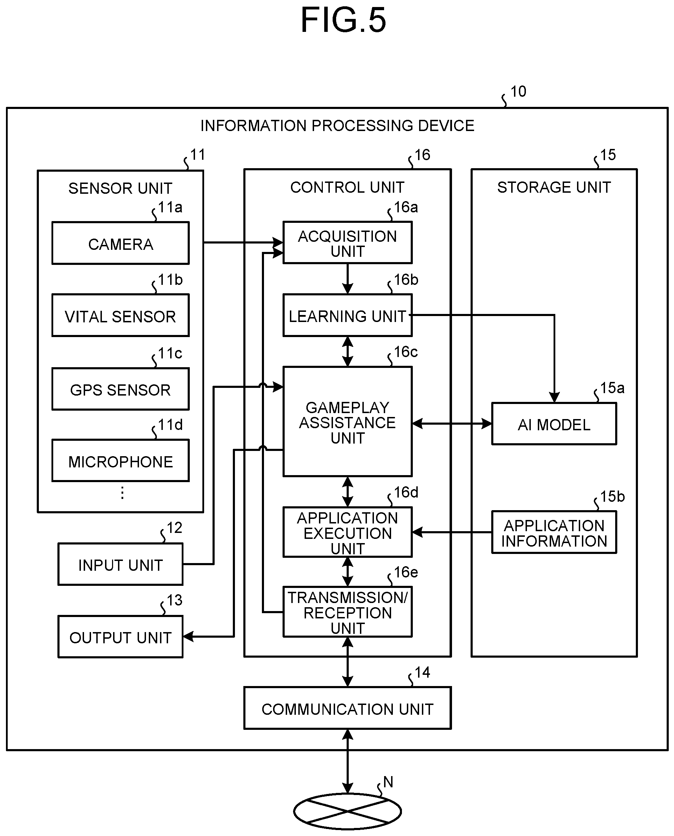

FIG. 5 is a block diagram illustrating the configuration example of the information processing device 10 according to the embodiment of the present disclosure. Note that only components necessary for describing features of the embodiment of the present disclosure are illustrated in FIG. 5, and description of general components is omitted.

In other words, each of the components illustrated in FIG. 5 is functionally conceptual, and is not necessarily configured physically in an illustrated manner. For example, a specific form of distribution/integration of each block is not limited to what is illustrated in the drawings, and a whole or part thereof can be functionally or physically distributed/integrated in an arbitrary unit according to various loads and usage conditions.

Furthermore, in the description with reference to FIG. 5, description of the already-described components may be simplified or omitted.

The information processing device 10 is a computer used by the user to use a game application and various other applications, and is, for example, a smartphone or a tablet terminal. Note that the information processing device 10 may be a personal computer (PC), a wearable device, or a game dedicated machine or the like as when being limited to a game application.

As illustrated in FIG. 5, the information processing device 10 includes a sensor unit 11, an input unit 12, an output unit 13, a communication unit 14, a storage unit 15, and a control unit 16.

The sensor unit 11 is a group of various sensors, and includes, for example, a camera 11a, a vital sensor 11b, a GPS sensor 11c, and a microphone 11d.

The camera 11a is, for example, a front camera of a smartphone or the like, and is provided in such a manner as to be able to capture image data from which an expression, a line of sight, a pupillary reaction, and the like of the user playing a game can be detected. The vital sensor 11b is a sensor that detects a mental and physical state of the user, is worn by the user, and measures vital data indicating the mental and physical state of the user playing the game, such as a heartbeat, brain waves, a blood oxygen level, and perspiration of the user.

The GPS sensor 11c measures a GPS position of the user playing the game. The microphone 11d collects utterance of the user playing the game. Note that, needless to say, the sensor unit 11 may appropriately include various sensors other than those described above, such as an inertial sensor.

The input unit 12 is an input component to which the user inputs various kinds of operation. Note that the input unit 12 may be integrated with the output unit 13 (described later) by a touch panel or the like. Thus, the input unit 12 may be a software component, and may be a graphical user interface (GUI) for operating a game application, for example.

The output unit 13 is, for example, a display device that displays visual information, and displays visual information such as a moving image and text related to an entire system or the game application under the control of the control unit 16. Examples of the above display device include a liquid crystal display (LCD), an organic light emitting diode (OLED), and the like.

Furthermore, the output unit 13 is, for example, a sounding device that emits voice information, and emits voice information such as a voice related to the entire system or the game application under the control of the control unit 16. Examples of the sounding device include a speaker and the like.

The communication unit 14 is realized, for example, by a network interface card (NIC) or the like. The communication unit 14 is connected in a wireless or wired manner to the network N such as the Internet or a mobile phone network, and transmits and receives information to and from the other information processing device 10 or a game server (not illustrated) via the network N.

The storage unit 15 is realized by, for example, a semiconductor memory element such as a random access memory (RAM), a read only memory (ROM), or a flash memory. In the example illustrated in FIG. 5, the storage unit 15 stores the AI model 15a and application information 15b.

The AI model 15a already illustrated in FIG. 4 is a learning model learned by a learning unit 16b (described later). As described above, the AI model 15a is a DNN or the like, and learns correlation of elements in a multidimensional feature amount space having elements indicating the contents of the game and the situation at the time of play as dimensions as needed.

Examples of the elements include a game title, an input by the user with respect to the contents of the game being played and an output corresponding thereto, a mental and physical state of the user with respect to the input or the output, a surrounding situation such as a GPS position and a temperature during the play, change operation at the time of erroneous input, and the like.

The application information 15b is information including various applications executed by the information processing device 10, such as programs of the game applications, various parameters used during execution of the game applications, and the like.

The control unit 16 is a controller, and is realized, for example, when various programs stored in the storage unit 15 are executed by a central processing unit (CPU), a micro processing unit (MPU), or the like with a RAM as a work area. Also, the control unit 16 can be realized by, for example, an integrated circuit such as an application specific integrated circuit (ASIC) or a field programmable gate array (FPGA).

The control unit 16 includes an acquisition unit 16a, the learning unit 16b, a gameplay assistance unit 16c, an application execution unit 16d, and a transmission/reception unit 16e, and realizes or executes a function and an action of information processing described below.

The acquisition unit 16a acquires the above-described situation at the time of the play, which situation includes the mental and physical state of the user and the surrounding situation, via the sensor unit 11. Furthermore, the acquisition unit 16a outputs the acquired situation at the time of the play to the learning unit 16b as needed. Note that the acquisition unit 16a can acquire the situation (such as a temperature, weather, traffic condition, and the like) at the time of the play via the network N not only from the sensor unit 11 but also from, for example, the transmission/reception unit 16e (described later).

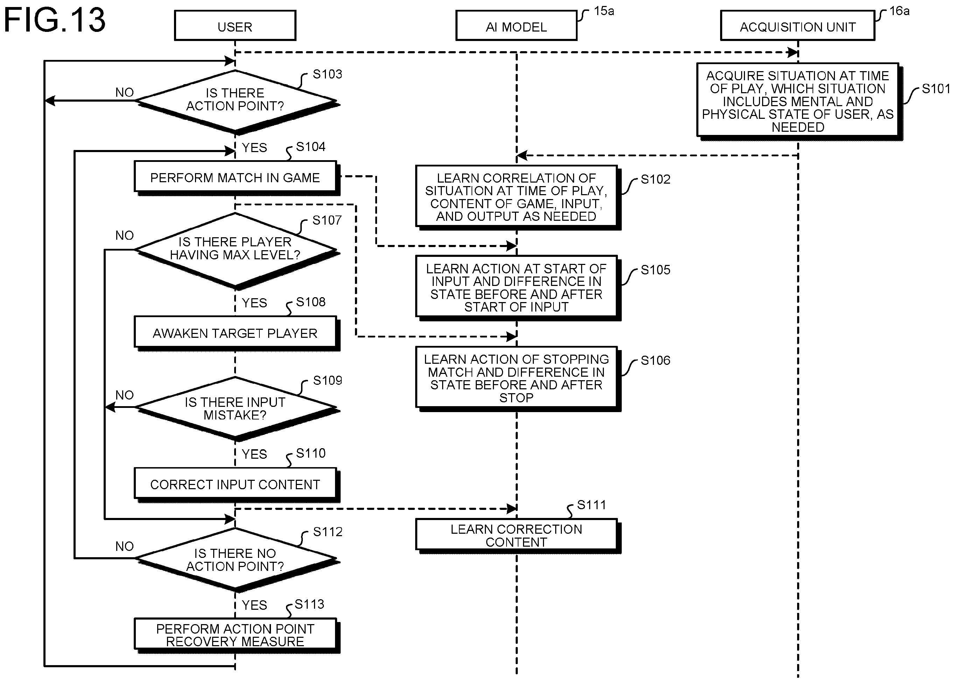

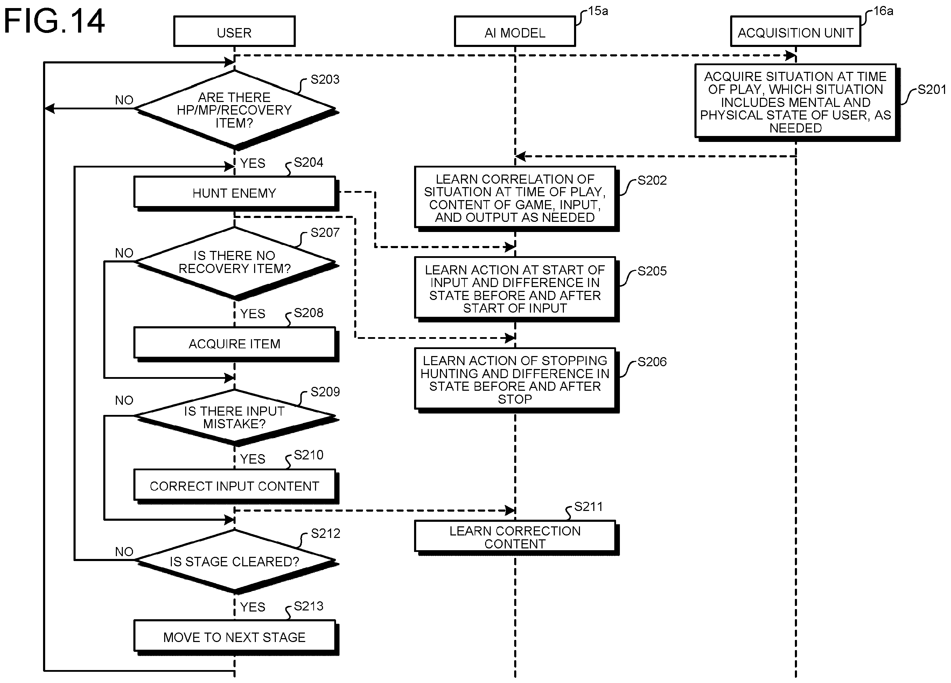

The learning unit 16b learns the AI model 15a on the basis of the situation at the time of the play, which situation is acquired by the acquisition unit 16a, and contents of a game which contents are input from the gameplay assistance unit 16c (described later). An example of learning algorithm executed by the learning unit 16b will be described later with reference to FIG. 13 and FIG. 14. Note that in a case where the AI model 15a is the DNN, the learning unit 16b learns the AI model 15a by using deep learning.

The gameplay assistance unit 16c executes gameplay assistance processing for realizing the function of the gameplay assistance application described with reference to FIG. 3 and FIG. 4. That is, the gameplay assistance unit 16c provides the auto-play function in a form in which a plurality of game applications is integrated.

Specifically, the gameplay assistance unit 16c proposes contents of the auto-play corresponding to the feature at the time of the play by the user, which contents are output from the AI model 15a, to the user with respect to the input situation at the time of the play and contents of the game. Then, the gameplay assistance unit 16c sets the contents of the auto-play in a form of being interactive with the user who uses the input unit 12 and the output unit 13 in response to the proposal. Then, with respect to the application execution unit 16d (described later) that executes the game application, the gameplay assistance unit 16c executes the auto-play in place of the user according to the set contents of the auto-play.

Furthermore, the gameplay assistance unit 16c provides the semi-auto-play function of reflecting the operation of the user only when the user intervenes via the input unit 12 interruptively with respect to the auto-play that substitutes for the user.

Furthermore, the gameplay assistance unit 16c notifies the other information processing device 10, with which the application execution unit 16d exchanges information related to the currently-executed game application via the network N, that the auto-play function is used.

Note that the gameplay assistance unit 16c executes the gameplay assistance processing while residing in the control unit 16 as, for example, middleware.

On the basis of the application information 15b, the application execution unit 16d executes the game application started by the user. In addition, from the gameplay assistance unit 16c, the application execution unit 16d receives an input by the user via the input unit 12 or an input by the auto-play in place of the user. In addition, the application execution unit 16d causes the output unit 13 to output the contents of the game, which progresses according to the received input, as an output result via the gameplay assistance unit 16c.

In a case where it is necessary to exchange the information related to the game application, which is currently executed by the application execution unit 16d, with the other information processing device 10, the transmission/reception unit 16e transmits and receives the information to and from the other information processing device 10 via the communication unit 14. Furthermore, the transmission/reception unit 16e receives the situation at the time of the play which situation can be acquired via the network N, and causes the acquisition unit 16a to perform the acquisition.

### <<3. Setting example of auto-play>>

### <3-1. Auto-play>

Next, a setting example of the auto-play in the information processing according to the embodiment of the present disclosure will be described with reference to FIG. 6 to FIG. 10. First, FIG. 6 is a view illustrating an example of an on/off setting screen of the auto-play.

In a case where the user sets on/off of the auto-play, the information processing device 10 displays the on/off setting screen of the auto-play in a manner illustrated in FIG. 6, for example. Such a setting screen is displayed by the gameplay assistance unit 16c, for example, in a case where the user selects an item corresponding to the auto-play from a system setting screen or the like of the information processing device 10.

Then, when the user sets the auto-play to be turned ON on the setting screen, an input to items below "auto-play setting" illustrated in FIG. 6 is enabled.

Then, the user can select "all game sessions" as an "auto-play target range" among the enabled items. In a case where the "all game sessions" are selected, it becomes possible to "perform AI learning of all gameplay and propose the auto-play in all play scenes" as illustrated in FIG. 6.

Note that although not illustrated, any game session may be selected instead of the "all game sessions".

Furthermore, as illustrated in FIG. 6, the user can arbitrarily select each item indicating contents of each auto-play, such as "level grinding in a field" or "searching for an item in a field" for the "auto-play contents". The gameplay assistance unit 16c can present the items as options on the basis of each of determined scenes as a result of the past AI learning.

Note that an example of the "auto-play contents" that can be set for the MMORPG and the like is illustrated in FIG. 6. For example, in a case where the user uses another game application such as a shooting game, a sport game, or the like by using the information processing device 10, in other words, in a case where such another game application is installed, an item corresponding to the other game application is displayed together in the "auto-play contents".

Incidentally, as the situation at the time of the play of the game application, the point of acquiring the vital data of the user, the surrounding situation including the GPS position, the temperature, and the like has already been described. In the information processing according to the embodiment of the present disclosure, it is possible to learn the correlation between the game application and the situation at the time of the play by AI learning using these pieces of data, calculate a matching rate of the auto-play, and set the auto-play based on the matching rate, for example.

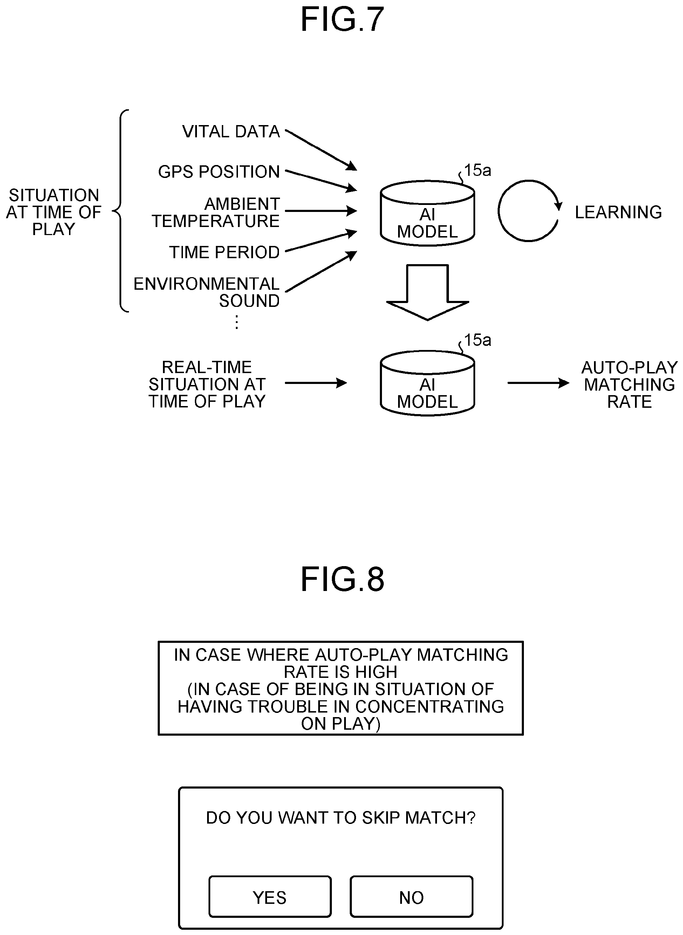

An example of such a case will be described with reference to FIG. 7 and FIG. 8. FIG. 7 is an explanatory diagram (part 1) of a setting example of the auto-play corresponding to the situation at the time of the play. Furthermore, FIG. 8 is an explanatory diagram (part 2) of the setting example of the auto-play corresponding to the situation at the time of the play.

As illustrated in FIG. 7, the vital data of the user, a GPS position, an ambient temperature, a time period, an environmental sound, and the like are acquired as the situation at the time of the play. There is a case where each of these pieces of data indicates, for example, a situation in which it is difficult for the user to concentrate on play in playing of the game application by himself/herself, such as during commuting, going to school, working, or taking a class, or a situation that is originally not suitable for playing.

Thus, as illustrated in FIG. 7, the AI model 15a may be learned by utilization of these pieces of data, and in a case where, for example, a real-time situation at the time of the play is input, the AI model 15a may output an auto-play matching rate indicating a degree whether the situation is suitable for the auto-play.

Then, as illustrated in FIG. 8, in a case where the auto-play matching rate is high, that is, in a situation in which it is difficult for the user to concentrate on the play, in a case of the sport game, for example, a dialogue such as "Do you want to skip the match?" may be displayed, and auto-play setting corresponding to a response to the dialogue may be enabled. As a result, it becomes possible to dynamically set the auto-play according to the real-time situation in which the user is in.

Furthermore, as described above, in the gameplay assistance processing, it is possible to replay a video of a play scene played by the user in the past, and propose contents of the auto-play according to each scene and corresponding to the feature of the user at the time of play to the user. Then, it is possible to interactively set the contents of the auto-play by a form of being interactive with the user for the proposal.

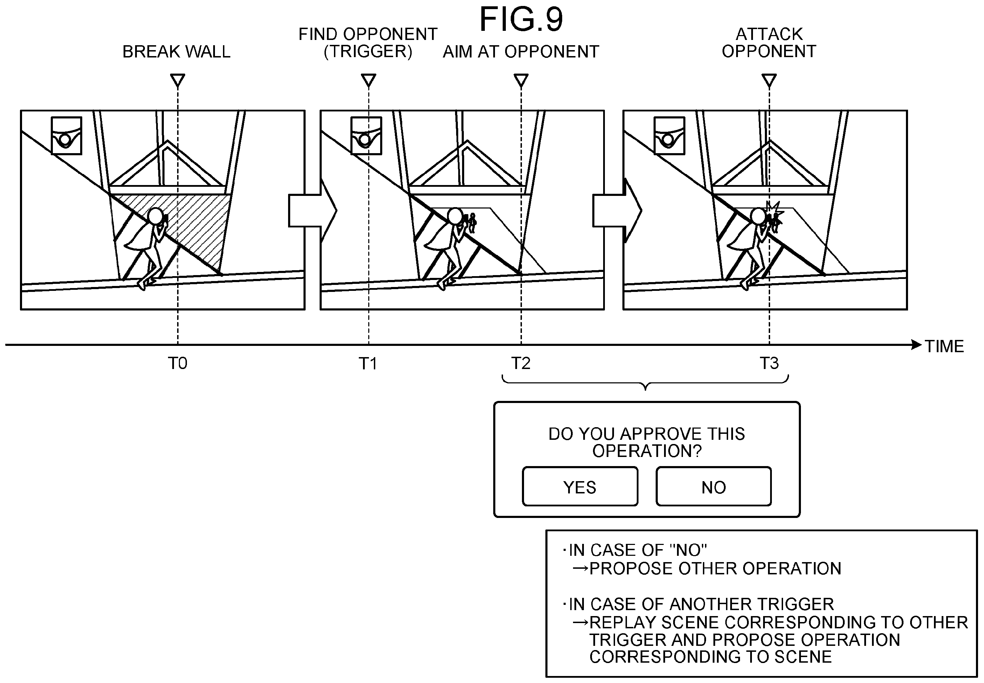

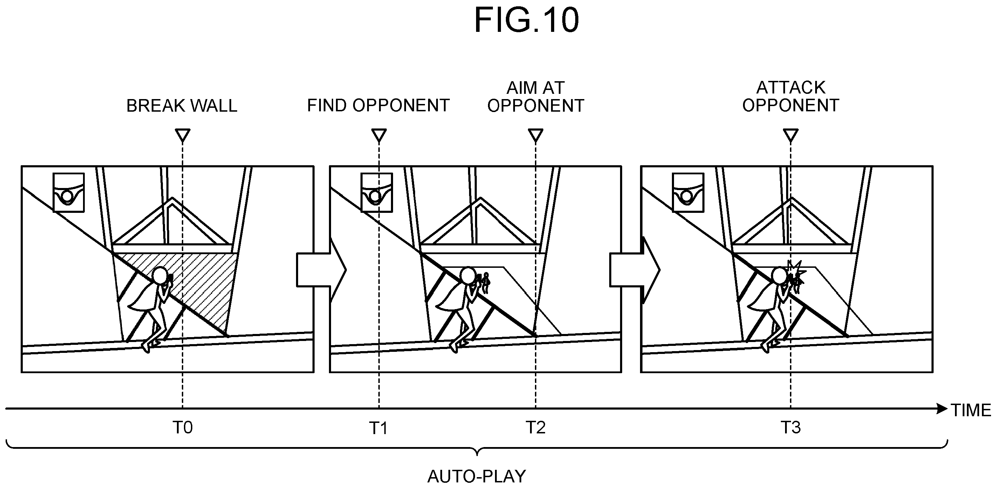

An example of such a case will be described with reference to FIG. 9 and FIG. 10. FIG. 9 is an explanatory diagram (part 1) of an example of interactively setting the auto-play by using a replay of a scene. FIG. 10 is an explanatory diagram (part 2) of the example of interactively setting the auto-play by using the replay of a scene.

As illustrated in FIG. 9, in a case where the game application is the TPS, it is assumed that there is a series of flows of scenes of "breaking a wall", "finding an opponent", "aiming at the opponent", and "attacking the opponent" in the play scenes played by the user in the past.

Then, while replaying a video of the series of play scenes, the gameplay assistance unit 16c displays a dialog asking the user "Do you approve this operation?" about the operation from "aiming at the opponent" to "attacking the opponent" illustrated at a time point T2 to a time point T3 with a scene of "finding an opponent" at a time point T1 as a trigger, for example.

Here, when the user selects "Yes", the operation from the time point T2 to the time point T3 is set as the auto-play contents in the series of scenes triggered by the time point T1, and the auto-play of reproducing the play scene played by the user in the past is executed as illustrated in FIG. 10.

On the other hand, as illustrated in FIG. 9, when the user selects "No" in the dialog asking "Do you approve this operation?", the gameplay assistance unit 16c proposes other operation. In the example of FIG. 9, the other operation is, for example, operation of attacking the opponent with another weapon or operation of not attacking the opponent.

Furthermore, in a case of another trigger other than "finding an opponent", the gameplay assistance unit 16c replays a scene corresponding to the other trigger, presents operation corresponding to the scene, and interactively sets contents of the auto-play.

By repeating such setting and confirmation, for example, in a case of "finding an opponent", it is possible to set the auto-play contents with high reproducibility corresponding to a feature at the time of the play by the user, such as immediately attacking in a case of a weak opponent, attacking with a different weapon in a case of a strong opponent, escaping in a case of a further strong opponent, and not attacking in a case where the opponent is an ally or the own level is MAX.

### <3-2. Semi-auto-play>

Next, a setting example of the above-described semi-auto-play function will be described with reference to FIG. 11. FIG. 11 is an explanatory diagram of the setting example of the semi-auto-play.

The gameplay assistance unit 16c can set the semi-auto-play triggered by, for example, utterance of a predetermined wake word by the user. As illustrated in FIG. 11, such a wake word evokes temporarily stopping the auto-play that substitutes for the user, such as "Wait" or "Oh".

Conversely, as illustrated in FIG. 11, the wake word that restarts the auto-play evokes the restart of the auto-play, such as "Good" or "Return".

For example, when a setting item of the semi-auto-play is provided on the setting screen of the auto-play illustrated in FIG. 6 and the wake word for starting/canceling the semi-auto-play is registered in the setting item of the semi-auto-play through the microphone 11d, the gameplay assistance unit 16c can perform setting of the semi-auto-play.

When setting of the semi-auto-play is performed in such a manner, as illustrated in FIG. 11, for example, utterance of the user which utterance indicates a start of the semi-auto-play at the time point T1 enables the user to perform intervening operation such as "not aiming at the opponent" or "not attacking the opponent" on the contents of the auto-play illustrated in FIG. 10. In addition, it becomes possible to resume the auto-play by utterance by the user which utterance indicates cancellation of the semi-auto-play at the time point T3.

Note that although an example in which the utterance of the predetermined wake word by the user is used as a trigger for starting/canceling the semi-auto-play has been described in the description with reference to FIG. 10 and FIG. 11, this is not a limitation. For example, the trigger of the start/cancellation of the semi-auto-play may be based on vital data of the user. Examples the above include a change in a line of sight, a gesture, a change in brain waves, and the like.

### <<4. Example of notification to another information processing device>>

Next, an example of notification to another information processing device 10 will be described with reference to FIG. 12. FIG. 12 is an explanatory diagram of the example of the notification to the other information processing device 10. Note that FIG. 12 is a view illustrating a game screen displayed on the other information processing device 10.

As illustrated in FIG. 12, in a case where another user confirms the user, who is in the auto-play, from a third party viewpoint by using the other information processing device 10 via the network N, the gameplay assistance unit 16c notifies the other information processing device 10 that the user is in the auto-play.

As illustrated in FIG. 12, the other information processing device 10 that receives the notification displays a symbol ("A" indicating "Auto Play" in the example of FIG. 12), an icon, or the like indicating that the auto-play is being performed together with a user name of the user. As a result, in an online game such as the TPS or the MMORPG, it becomes possible for another participant to easily distinguish whether the user is in the auto-play, or to prevent unnecessary talking in chat or the like.

### <<5. Processing sequence of learning algorithm>>

Next, a processing sequence of the learning algorithm in the information processing device 10 will be described with reference to FIG. 13 and FIG. 14. FIG. 13 is a processing sequence (part 1) of the learning algorithm in the information processing device 10. FIG. 14 is a processing sequence (part 2) of the learning algorithm in the information processing device 10.

Note that FIG. 13 is a view illustrating a processing sequence of a case where the game application is a sport game, and FIG. 14 is a view illustrating a processing sequence of a case where the game application is an RPG game.

As illustrated in FIG. 13, first, the acquisition unit 16a acquires the situation at the time of the play, which situation includes the mental and physical state of the user, as needed (Step S101). Then, by the learning unit 16b, the AI model 15a learns the correlation of the situation at the time of the play, the contents of the game, the input, and the output as needed (Step S102).

On the other hand, the user checks whether there is an action point while playing the sport game (Step S103). In a case where there is the action point (Step S103, Yes), a match in the game is performed (Step S104).

Then, by the learning unit 16b, the AI model 15a learns an input start action in Step S104 and a difference in a state before and after the start of the input (Step S105). Here, the difference in the state before and after the start of the input indicates a difference in the action point before the match and at the start of the match.

Furthermore, by the learning unit 16b, the AI model 15a learns an action of stopping the match at the end of Step S104 and the difference in the state before and after the stop (Step S106). The difference in the state before and after the stop indicates a difference in a level of a player in the game before and after the match.

Note that in a case where there is no action point (Step S103, No), Step S103 is repeated until the action points are accumulated.

Then, after playing the match, the user checks whether there is a player whose level is MAX (Step S107). In a case where there is a player whose level is MAX (Step S107, Yes), the target player is awakened (Step S108).

Furthermore, the user checks whether there is an input mistake with respect to the awakening of the player (Step S109). In a case where there is the input mistake (Step S109, Yes), the input contents are corrected (Step S110).

Then, by the learning unit 16b, the AI model 15a learns the correction contents in Step S110 (Step S111). Note that the learning unit 16b can learn the AI model 15a related to the input mistake by using, for example, the utterance of "Oh" by the user, a change in brain waves, or the like as a trigger.

Then, the user checks whether there is no action point (Step S112). In a case where there is the action point (Step S112, No), the user repeats the action from Step S104.

In a case where there is no action point (Step S112, Yes), the user performs an action point recovery measure (Step S113). The action point recovery measure is, for example, paying money, waiting for time recovery, or the like. Then, the user repeats the action from Step S103.

Furthermore, also in a case where the game application is the RPG game, as illustrated in FIG. 14, the acquisition unit 16a acquires the situation at the time of the play, which situation includes the mental and physical state of the user, as needed (Step S201). Then, by the learning unit 16b, the AI model 15a learns the correlation of the situation at the time of the play, the contents of the game, the input, and the output as needed (Step S202).

On the other hand, while playing the RPG game, the user checks whether there are a health point (HP)/magic point (MP)/recovery item (Step S203). In a case where there are these points and items (Step S203, Yes), movement to a place where an enemy that can be hunted at the current level is present and an important item in the current experience point or the current state is present is performed, and the enemy is hunted (Step S204).

Then, by the learning unit 16b, the AI model 15a learns an input start action in Step S204 and a difference in a state before and after the start of the input (Step S205). Here, the state before and after the start of the input indicates the HP/MP/recovery item, level, enemy in the hunting place, item, and the like.

Furthermore, by the learning unit 16b, the AI model 15a learns the action of stopping the hunting at the end of Step S204 and the difference in the state before and after the stop (Step S206). Here, the state before and after the stop indicates, for example, the remaining number of recovery items.

Note that in a case where there is no HP/MP/recovery item (Step S203, No), Step S203 is repeated until these are accumulated by time recovery or the like.

Then, after hunting the enemy, the user checks whether there is no recovery item (Step S207). In a case where there is no recovery item (Step S207, Yes), the item is acquired (Step S208). In a case where there is the recovery item (Step S207, No), transition to Step S209 is performed.

Furthermore, the user checks whether there is an input error with respect to hunting of the enemy (Step S209). In a case where there is the input mistake (Step S209, Yes), the input contents is corrected (Step S210).

Then, by the learning unit 16b, the AI model 15a learns the correction contents in Step S210 (Step S211). Note that the learning unit 16b can perform learning of the AI model 15a related to the input mistake by using, for example, the utterance of "Oh" by the user, the change in brain waves, or the like as the trigger as described above.

Then, the user checks whether a stage has been cleared (Step S212). The stage indicates, for example, a current hunting place. In a case where the stage is not cleared (Step S212, No), the user repeats the action from Step S204.

In a case where the stage is cleared (Step S212, Yes), the user moves to a next stage (Step S213), and repeats the action from Step S203.

### <<6. Modification example>>

Incidentally, there are some modification examples for the above-described embodiment of the present disclosure.

For example, although it is assumed that the AI model 15a is the DNN in the embodiment of the present disclosure, the configuration of the AI model 15a learned by machine learning is not limited. For example, the AI model 15a may be a variational auto encoder (VAE), a generative adversarial network (GAN), or the like. In addition, algorithm other than deep learning may be used as algorithm of machine learning. For example, machine learning may be executed by a regression analysis method such as support vector regression using a pattern identifier such as a support vector machine (SVM) and the AI model 15a may be learned. Furthermore, here, the pattern identifier is not limited to the SVM, and may be, for example, AdaBoost. In addition, random forest, deep forest, or the like may be used.

Furthermore, among the pieces of processing described in the above-described embodiment of the present disclosure, a whole or part of the processing described to be automatically performed can be manually performed, or a whole or part of the processing described to be manually performed can be automatically performed by a known method. In addition, the processing procedures, specific names, and information including various kinds of data or parameters in the above document or in the drawings can be arbitrarily changed unless otherwise specified. For example, various kinds of information illustrated in each of the drawings are not limited to the illustrated information.

In addition, each component of each of the illustrated devices is a functional concept, and does not need to be physically configured in the illustrated manner. That is, a specific form of distribution/integration of each device is not limited to what is illustrated in the drawings, and a whole or part thereof can be functionally or physically distributed/integrated in an arbitrary unit according to various loads and usage conditions.

In addition, the above-described embodiments of the present disclosure can be arbitrarily combined in a region in which the processing contents do not contradict each other. Furthermore, the order of steps illustrated in the sequence diagram or the flowchart of the present embodiment can be changed as appropriate.

### <<7. Hardware configuration>>

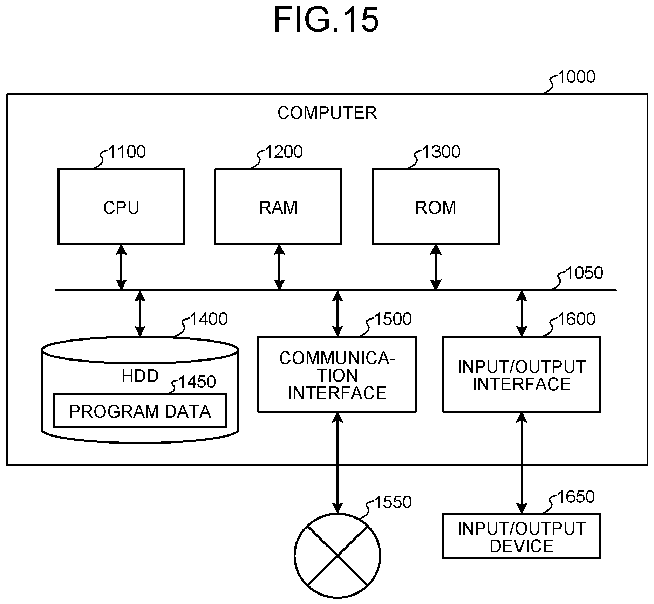

Furthermore, the information processing device 10 according to the above-described embodiment of the present disclosure is realized by, for example, a computer 1000 having a configuration in a manner illustrated in FIG. 15. FIG. 15 is a hardware configuration diagram illustrating an example of the computer 1000 that realizes functions of the information processing device 10. The computer 1000 includes a CPU 1100, a RAM 1200, a ROM 1300, a hard disk drive (HDD) 1400, a communication interface 1500, and an input/output interface 1600. Each unit of the computer 1000 is connected by a bus 1050.

The CPU 1100 operates on the basis of programs stored in the ROM 1300 or the HDD 1400, and controls each unit. For example, the CPU 1100 expands the programs, which are stored in the ROM 1300 or the HDD 1400, in the RAM 1200 and executes processing corresponding to the various programs.

The ROM 1300 stores a boot program such as a basic input output system (BIOS) executed by the CPU 1100 during activation of the computer 1000, a program that depends on hardware of the computer 1000, and the like.

The HDD 1400 is a computer-readable recording medium that non-temporarily records the programs executed by the CPU 1100, data used by the programs, and the like. Specifically, the HDD 1400 is a recording medium that records a program according to the embodiment of the present disclosure which program is an example of program data 1450.

The communication interface 1500 is an interface with which the computer 1000 is connected to an external network 1550 (such as the Internet). For example, the CPU 1100 receives data from another equipment or transmits data generated by the CPU 1100 to another equipment via the communication interface 1500.

The input/output interface 1600 is an interface to connect an input/output device 1650 and the computer 1000. For example, the CPU 1100 receives data from an input device such as a keyboard or mouse via the input/output interface 1600. Furthermore, the CPU 1100 transmits data to an output device such as a display, speaker, or printer via the input/output interface 1600. Also, the input/output interface 1600 may function as a medium interface that reads a program or the like recorded on a predetermined recording medium (medium). The medium is, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 10 according to the embodiment of the present disclosure, the CPU 1100 of the computer 1000 realizes a function of the control unit 16 by executing the program loaded on the RAM 1200. Also, the HDD 1400 stores a program according to the present disclosure, and data in the storage unit 15. Note that the CPU 1100 reads the program data 1450 from the HDD 1400 and performs execution thereof. However, these programs may be acquired from another device via the external network 1550 in another example.

### <<8. Conclusion>>

As described above, according to an embodiment of the present disclosure, the information processing device 10 includes the learning unit 16b that learns a situation at the time of operation by the user on a game application (corresponding to an example of an "application") by machine learning, and the gameplay assistance unit 16c (corresponding to an example of an "assistance unit") that executes, across one or more of the game applications, operation assistance processing of performing auto-play (corresponding to an example of "automatic operation") of the game application by using a learning result of the learning unit 16b. As a result, it is possible to improve convenience in the gameplay (corresponding to an example of "application operation") by the user regardless of the game application.

### Reference Signs List

- 10: INFORMATION PROCESSING DEVICE
- 11: SENSOR UNIT
- 11a: CAMERA
- 11b: VITAL SENSOR
- 11c: GPS SENSOR
- 11d: MICROPHONE
- 12: INPUT UNIT
- 13: OUTPUT UNIT
- 14: COMMUNICATION UNIT
- 15: STORAGE UNIT
- 15a: AI MODEL
- 15b: APPLICATION INFORMATION
- 16: CONTROL UNIT
- 16a: ACQUISITION UNIT
- 16b: LEARNING UNIT
- 16c: GAMEPLAY ASSISTANCE UNIT
- 16d: APPLICATION EXECUTION UNIT
- 16e: TRANSMISSION/RECEPTION UNIT
- N: NETWORK

## Claims

1. An information processing device (10) comprising:
a learning unit (16b) that learns a situation at a time of operation by a user on an application by machine learning; and
an assistance unit (16c) that executes, across one or more of the applications, operation assistance processing of automatically operating the application by using a learning result of the learning unit, wherein
the application is a game application, and
the situation at the time of operation includes information related to the situation at the time of the play by the user which situation is indicated by what is other than the game application,
the learning unit learns correlation of each of elements of the information related to the situation at the time of play and information related to the game application, and
the assistance unit performs the automatic operation on behalf of the user by using a learning result of the correlation and sets contents of the automatic operation according to a feature of the user at the time of the play which feature is indicated by a learning result of the correlation,
**characterised by**:
wherein
the assistance unit is provided in such a manner that the operation of the user can intervene interruptively during the execution of the automatic operation corresponding to the set contents to correct the contents and the learning unit is configured to learn the corrected contents.

2. The information processing device according to claim 1, wherein
the elements include
a game title of the game application, an input by the user during the play, an output in response to the input, a mental and physical state of the user with respect to the input or the output, position information of the user, a temperature around the user, and change operation at a time of an erroneous input.

3. The information processing device according to claim 1, wherein
the assistance unit
replays a play scene of the user, proposes contents of the automatic operation to the user according to the replayed scene and according to a feature at the time of the play, and sets the contents of the automatic operation in a form of being interactive with the user.

4. The information processing device according to claim 1, wherein
the assistance unit
is provided in such a manner that intervention by or cancellation of the operation of the user can be performed with utterance of a predetermined wake word by the user as a trigger.

5. The information processing device according to claim 1, wherein
the assistance unit
notifies another user other than the user, via a network, that the user is assisted by the operation assistance processing.

6. An information processing method comprising:
learning a situation at a time of operation by a user on an application by machine learning; and
executing, across one or more of the applications, operation assistance processing of automatically operating the application by using a learning result of the learning wherein
the application is a game application, and
the situation at the time of operation includes information related to the situation at the time of the play by the user which situation is indicated by what is other than the game application,
the machine learning learns correlation of each of elements of the information related to the situation at the time of play and information related to the game application, and
the assistance processing performs the automatic operation on behalf of the user by using a learning result of the correlation and sets contents of the automatic operation according to a feature of the user at the time of the play which feature is indicated by a learning result of the correlation, **characterised by:**
wherein
the assistance processing is provided in such a manner that the operation of the user can intervene interruptively during the execution of the automatic operation corresponding to the set contents to correct the contents and the learning unit is configured to learn the corrected contents.

7. A program causing a computer to realize the method according to claim 6.

## Patentansprüche

1. Informationsverarbeitungsvorrichtung (10), umfassend:
eine Lerneinheit (16b), die eine Situation zu einem Zeitpunkt einer Bedienung durch einen Benutzer an einer Anwendung durch maschinelles Lernen lernt; und
eine Unterstützungseinheit (16c), die, über eine oder mehrere der Anwendungen hinweg, eine Betriebsunterstützungsverarbeitung ausführt, die die Anwendung durch Verwenden eines Lernergebnisses der Lerneinheit automatisch betreibt, wobei
die Anwendung eine Spielanwendung ist, und
die Situation zu dem Zeitpunkt des Betriebs Informationen bezüglich der Situation zu dem Zeitpunkt des Spiels durch den Benutzer einschließt, welche Situation durch das angezeigt wird, was anders als die Spielanwendung ist,
die Lerneinheit
die Korrelation jedes der Elemente der Informationen bezüglich der Situation zu dem Zeitpunkt eines Spiels und der Informationen bezüglich der Spielanwendung lernt, und
die Unterstützungseinheit
den automatischen Betrieb im Namen des Benutzers durch Verwenden eines Lernergebnisses der Korrelation durchführt, und Inhalte des automatischen Betriebs gemäß einem Merkmal des Benutzers zu dem Zeitpunkt des Spiels einstellt, welches Merkmal durch ein Lernergebnis der Korrelation angezeigt wird,
**gekennzeichnet durch:**
wobei
die Unterstützungseinheit
auf eine Weise bereitgestellt ist, dass der Betrieb des Benutzers unterbrechend während der Ausführung des automatischen Betriebs, der den eingestellten Inhalten entspricht, eingreifen kann, um die Inhalte zu korrigieren, und die Lerneinheit konfiguriert ist, um die korrigierten Inhalte zu lernen.

2. Informationsverarbeitungsvorrichtung nach Anspruch 1, wobei
die Elemente einschließen
einen Spieltitel der Spielanwendung, eine Eingabe durch den Benutzer während des Spiels, eine Ausgabe als Reaktion auf die Eingabe, einen geistigen und körperlichen Zustand des Benutzers in Bezug auf die Eingabe oder die Ausgabe, Positionsinformationen des Benutzers, eine Temperatur um den Benutzer herum und einen Änderungsbetrieb zu einem Zeitpunkt einer fehlerhaften Eingabe.

3. Informationsverarbeitungsvorrichtung nach Anspruch 1, wobei
die Unterstützungseinheit
eine Spielszene des Benutzers wiedergibt, dem Benutzer Inhalte des automatischen Betriebs entsprechend der wiedergegebenen Szene und entsprechend einem Merkmal zu dem Zeitpunkt des Spiels vorschlägt und die Inhalte des automatischen Betriebs in einer Form einstellt, die interaktiv mit dem Benutzer ist.

4. Informationsverarbeitungsvorrichtung nach Anspruch 1, wobei
die Unterstützungseinheit
auf eine Weise bereitgestellt wird, dass ein Eingriff durch oder eine Aufhebung des Betriebs des Benutzers mit einer Äußerung eines zuvor bestimmten Aktivierungsworts durch den Benutzer als einen Auslöser durchgeführt werden kann.

5. Informationsverarbeitungsvorrichtung nach Anspruch 1, wobei
die Unterstützungseinheit
einen anderen Benutzer als den Benutzer, über ein Netzwerk, benachrichtigt, dass der Benutzer durch die Betriebsunterstützungsverarbeitung unterstützt wird.

6. Informationsverarbeitungsverfahren, umfassend:
Lernen einer Situation zu einem Zeitpunkt des Betriebs durch einen Benutzer an einer Anwendung durch maschinelles Lernen; und
Ausführen, über eine oder mehrere der Anwendungen, einer Betriebsunterstützungsverarbeitung des automatischen Betreibens der Anwendung durch Verwenden eines Lernergebnisses des Lernens, wobei
die Anwendung eine Spielanwendung ist, und
die Situation zu dem Zeitpunkt des Betriebs Informationen bezüglich der Situation zu dem Zeitpunkt des Spiels durch den Benutzer einschließt, welche Situation durch das angezeigt wird, was anders als die Spielanwendung ist,
das maschinelle Lernen eine Korrelation jedes der Elemente der Informationen bezüglich der Situation zu dem Zeitpunkt des Spiels und der Informationen bezüglich der Spielanwendung lernt, und
die Unterstützungsverarbeitung den automatischen Betrieb im Namen des Benutzers durch Verwenden eines Lernergebnisses der Korrelation durchführt und Inhalte des automatischen Betriebs gemäß einem Merkmal des Benutzers zu dem Zeitpunkt des Spiels einstellt, welches Merkmal durch ein Lernergebnis der Korrelation angezeigt wird, **gekennzeichnet durch:**
wobei
die Unterstützungsverarbeitung auf eine Weise bereitgestellt wird, dass der Betrieb des Benutzers unterbrechend während der Ausführung des automatischen Betriebs, der den eingestellten Inhalten entspricht, eingreifen kann, um die Inhalte zu korrigieren, und die Lerneinheit konfiguriert ist, um die korrigierten Inhalte zu lernen.

7. Programm, das einen Computer veranlasst, das Verfahren nach Anspruch 6 zu verwirklichen.

## Revendications

1. Dispositif de traitement d'informations (10) comprenant :
une unité d'apprentissage (16b) qui apprend une situation à un moment de fonctionnement par un utilisateur sur une application par apprentissage automatique ; et
une unité d'assistance (16c) qui exécute, à travers une ou plusieurs des applications, un traitement d'aide à l'exploitation de l'application automatiquement à l'aide d'un résultat d'apprentissage de l'unité d'apprentissage, dans lequel
l'application est une application de jeu, et
la situation au moment de l'opération comporte des informations relatives à la situation au moment du jeu par l'utilisateur, laquelle situation est indiquée par ce qui est autre que l'application de jeu,
l'unité d'apprentissage
apprend une corrélation entre chacun des éléments des informations se rapportant à la situation au moment du jeu et des informations se rapportant à l'application de jeu, et
la cellule d'assistance
effectue l'opération automatique pour le compte de l'utilisateur à l'aide d'un résultat d'apprentissage de la corrélation et définit les contenus de l'opération automatique selon une caractéristique de l'utilisateur au moment de la lecture, laquelle caractéristique est indiquée par un résultat d'apprentissage de la corrélation,
**caractérisé par :**
dans lequel
la cellule d'assistance
est fournie de manière à ce que l'opération de l'utilisateur puisse intervenir de manière interrompue pendant l'exécution de l'opération automatique correspondant au contenu défini pour corriger le contenu et l'unité d'apprentissage est configurée pour apprendre le contenu corrigé.

2. Dispositif de traitement d'informations selon la revendication 1, dans lequel
les éléments comportent
un titre de jeu de l'application de jeu, une entrée par l'utilisateur pendant le jeu, une sortie en réponse à l'entrée, un état mental et physique de l'utilisateur par rapport à l'entrée ou à la sortie, des informations de position de l'utilisateur, une température autour de l'utilisateur, et un changement d'opération à un moment d'une entrée erronée.

3. Dispositif de traitement d'informations selon la revendication 1, dans lequel
la cellule d'assistance
rejoue une scène de lecture de l'utilisateur, propose des contenus de l'opération automatique à l'utilisateur selon la scène rejouée et selon une caractéristique au moment de la lecture, et définit le contenu de l'opération automatique sous une forme d'interaction avec l'utilisateur.

4. Dispositif de traitement d'informations selon la revendication 1, dans lequel
la cellule d'assistance
est fournie de telle manière que l'intervention ou l'annulation de l'opération de l'utilisateur peut être effectuée en prononçant un mot de réveil prédéterminé par l'utilisateur comme déclencheur.

5. Dispositif de traitement d'informations selon la revendication 1, dans lequel
la cellule d'assistance
notifie à un autre utilisateur autre que l'utilisateur, par l'intermédiaire d'un réseau, que l'utilisateur est assisté par le traitement d'aide à l'opération.

6. Procédé de traitement d'informations comprenant :
l'apprentissage d'une situation à un moment de fonctionnement par un utilisateur sur une application par apprentissage automatique ; et
l'exécution, sur une ou plusieurs des applications, d'un traitement d'aide à l'exploitation d'exploitation automatique de l'application à l'aide d'un résultat d'apprentissage de l'apprentissage, dans lequel
l'application est une application de jeu, et
la situation au moment de l'opération comporte des informations relatives à la situation au moment du jeu par l'utilisateur, laquelle situation est indiquée par ce qui est autre que l'application de jeu,
l'apprentissage automatique apprend une corrélation entre chacun des éléments des informations se rapportant à la situation au moment de jouer et des informations liées à l'application de jeu, et
le traitement d'assistance réalise l'opération automatique pour le compte de l'utilisateur à l'aide d'un résultat d'apprentissage de la corrélation et définit les contenus de l'opération automatique en fonction d'une caractéristique de l'utilisateur au moment de la lecture, laquelle caractéristique est indiquée par un résultat d'apprentissage de la corrélation, **caractérisé par** :
dans lequel
le traitement d'assistance est fourni de telle manière que l'opération de l'utilisateur peut intervenir de manière interrompue pendant l'exécution de l'opération automatique correspondant aux contenus définis pour corriger les contenus et que l'unité d'apprentissage est configurée pour apprendre les contenus corrigés.

7. Programme amenant un ordinateur à réaliser le procédé selon la revendication 6.
